# EUROPEAN PATENT APPLICATION

(11) **EP 2 083 068 A1**
(43) Date of publication of application: **29.07.2009**
(21) Application number: 08794047.4
(22) Date of filing: 02.07.2008
(51) Int. Cl.: C12H 1/00, C02F 1/28, C02F 9/00, B01D 35/04

(54) **DEVICE FOR TREATING AND PURIFYING A LIQUID PRODUCT**

(30) Priority: 04.07.2007 RU 2007125263
(71) Applicant: Obschestvo S Ogranichennoi Otvetstvennostiyu "Eurostandart", Moscow 107-497 (RU)
(72) Inventor: KISTEREV, Valeriy Evgenyevich, Moscow 105264 (RU); ZHERDEV, Pavel Dmitrievich, Mytischi Moskovskaya obl. 141021 (RU)
(74) Representative: Sonn & Partner Patentanwälte
(86) International application number: PCT/RU2008/000428
(87) International publication number: WO 2009/008771

(57) **Abstract**

The invention relates to the food industry. A liquid product is treated and purified being passed through a mixture of sorbing components confined between filtering materials. Each portion of vodka poured from a bottle into a drinking vessel prior to be consumed is treated and purified by the consumer himself by pressing it from the bottle at an optimal flow rate through a primary filtering material, sorbing agent(s) and a secondary filtering material, which are placed in a cartridge body, using air pressure inside the bottle produced, as necessary, by means of a small-sized air pump which is arranged outside of the bottle in a body and is connected to an electrical micromotor.

## Description

The invention relates to the food industry, in particular to the distillery industry. The device is intended to perform individual treatment and purification of each portion of the liquid product, including the alcohol-containing one, poured from the bottle at the time prior to its consumption by the consumer himself.

There exists a device for treatment and purification of a liquid product (see US patent No. 6193886 dated 27.02.2001), containing a cartridge, consisting of a body connectable with the neck of the bottle, a filter located therein and an air supply device.

The imperfections of the existing device are: low efficiency of the cartridge used, caused by passing of a liquid product of different levels of purification through it; allocation of the cartridge inside the container of the liquid; impossibility to work with alcohol-containing liquids and the impossibility to use the rigid body bottles.

The task intended to be resolved by the invention is in elimination of the prototype's imperfections and ensuring the required pressure in the bottle to push a liquid product, including the alcohol-containing one, through the relevant filtering materials and sorbing agents, to ensure its efficient treatment and purification, as well as the acceptable, for the consumer, speed of its flowing from the bottle and pouring into the drinking vessels, by means of creating a small individual device for treatment and purification of a liquid product located inside a bottle, including that with a rigid body, on the basis of a small air pump connected with a micromotor, as well as formation of the control and indication unit for the operation of the device to make its use comfortable and save the resources of the power element, as well as creation of an automatic switch that shall turn on at the moment when the bottle is turned up-side-down to pour the product into the drinking vessel, and shall automatically turn off when the bottle is returned to the initial position to make its use comfortable and save the resources of the power element.

The said result is achieved by virtue of the device, containing a cartridge and an air supply device in which the filter is fixed on the internal surface of the cartridge body, hermetically connected with the neck of the bottle, and the air supply device to form the required pressure in the bottle, consists of a body fixed to the bottle, inside which a small air pump is located, connected with a micromotor and coupled with its outgoing orifice with the unit of air supply into the bottle. The control circuit of the device may contain a power switch either located on the body of the device and an automatic switch fixed inside the body or a position sensor located inside the body of the device. The automatic switch can be made in the form of a hermetic contact or magnetically operated sealed switch. Batteries of the corresponding type can be used as power elements. The control assembly, indicating operational condition of the device, may contain a light indicator in the form of light diodes and/or a sound indicator which may consist of a permanently programmable memory device in the form of a memory microcircuit with recording of a melody or a voice phrase, a low frequency amplifier and a speaker. The air supply device, creating the pressure, may be executed in the form of a small air pump, connected with a micromotor, located outside the bottle, in a body. The air supply assembly may be created by a end-to-end air channel or a ring seal element with an orifice for an air supply tube, joint with the channels made in the internal surface of the cartridge's body and limited by the external surface of the neck of the bottle or an orifice made in the bottle, airtight connected with the tube by a seal element. The air supply assembly may also be formed by an air supply tube which one end is connected to the small air pump, and the other is connected with an additional through orifice in the encapsulating element and its central orifice. The filter may be formed of the sequentially placed rough filtering material, sorbing agent or a mixture thereof and a fine filtering material. To avoid splashing, the outgoing orifice of the body of the cartridge may contain a spreader. The device may be equipped with a sealing cap with fixation of the first opening by means of a detachable ring, connected with the body by means of a screw thread. The body of the cartridge and the body of the air supply device, creating excessive pressure, with control and indication elements may be sealed by a safety cap. The safety cap may be made of a transparent material. The body of the cartridge may be airtight connected with the neck of a bottle by a placement spot with an internal screw thread, placement spot with an attachment or an encapsulating element. The placement spot for connection of the cartridge body with the neck of the bottle may be equipped by a sealing holder in form of a ring lock. The employment of a small pump connected with a micromotor operating from standard power elements in the air supply device enables the creation and stable maintenance of the required pressure in the internal space of the bottle with a liquid product, which enables to employ the filtering materials with very high filtering capacity in the filter, sorbing agents required for efficient treatment of vodka, as well as providing the vodka pouring speed into the drinking vessel, acceptable for the consumer. It is absolutely obvious that the prototype provides no possibility for it in principle. Fixation of the filtering materials and sorbing agents on the internal surface of the body of the cartridge and their even distribution along the flow of the liquid product allows formation of the maximum possible work area of the filter, as well as even treatment level for all sections of the liquid product flow pushed through the filter.

The essence of the device is illustrated by the figures.
The figure 1 shows a longitudinal section of the device for treatment and purification of a liquid product with pressurized air supply inside the bottle through the ring sealing element by means of a small air pump connected with a micromotor.
The figure 2 shows a longitudinal section of the same with the screw thread connection of the body of the cartridge and the bottle.
The figure 3 shows a longitudinal section of the device for treatment and purification of a liquid product with pressurized air supply inside the bottle through the air feeder in the body of the cartridge, which is connected with the neck of the bottle through a placement spot with an attachment and a sealing holder.
The figure 4 shows a longitudinal section of the same with the screw thread connection of the cartridge and the bottle.
The figure 5 shows a longitudinal section of the device for treatment and purification of a liquid product with pressurized air supply inside the bottle through an additional orifice in its body.
The figure 6 shows a longitudinal section of the same with the screw thread connection of the cartridge and the bottle.
The figure 7 shows a longitudinal section of the device for treatment and purification of a liquid product with pressurized air supply inside the bottle through the orifices in the encapsulating element, besides, this version of the control assembly of the device contains automatic switch with light and audio indication of the operation.

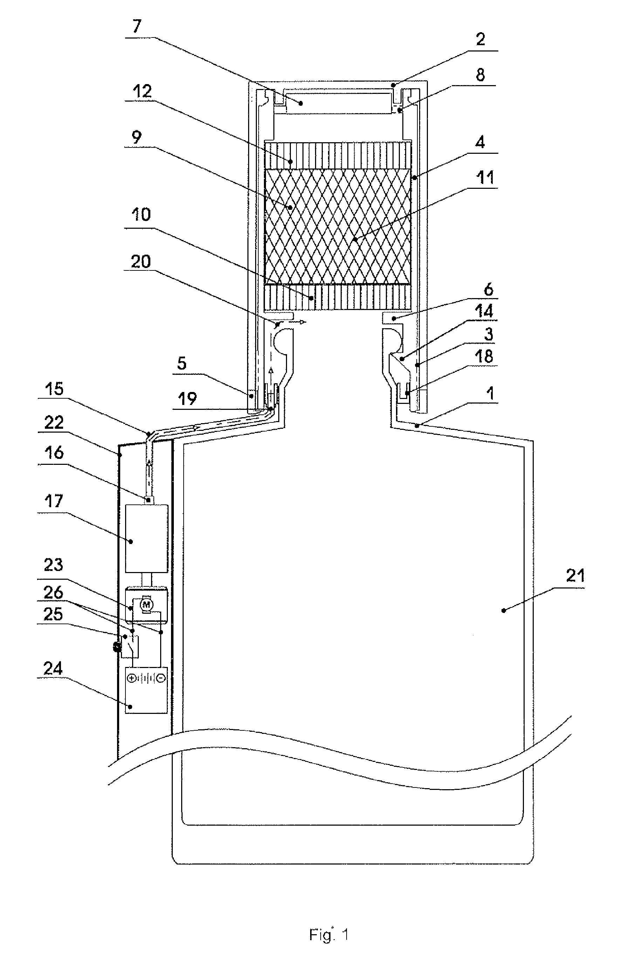

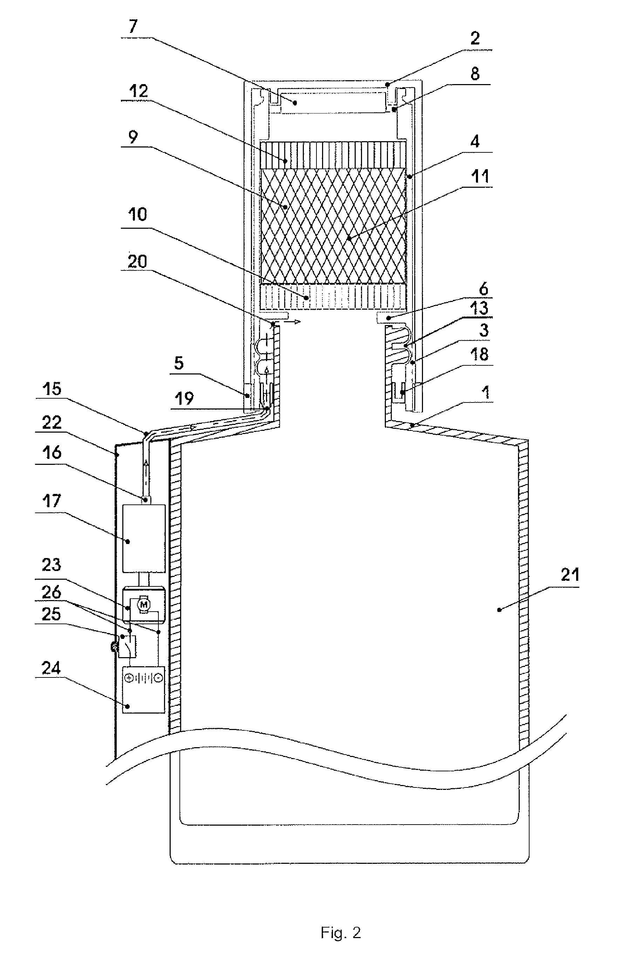

The first example of the device implementation is shown on the figures 1 and 2.

The device, apart from the container 1 for the vodka (the bottle) contains three main components: the cartridge with a filter, the air supply device to ensure the required pressure in the internal volume of the bottle and the assembly to supply air into the bottle.

The cartridge with the filter consists of a sealing cap 2 with internal screw thread 3 to be screwed onto the body 4 of the cartridge and the first opening holder in form of a detachable ring 5. The body 4 has a placement spot 6 onto the neck of the bottle, limiting spreader 7 with channels 8 for water flow, thread 3 on its outer side and the space 9 where in the following is placed sequentially: rough filtering material 10; sorbing agent 11 or a mixture thereof and fine filtering material 12.
The placement spot on the internal surface of the body for its connection with the neck of the bottle may be made in form of a directional thread 13 (figure 2) or an attachment with a sealing holder in form of ring lock 14 (figure 1).

The assembly for air supply into the bottle consists of a tube 15 for air supply, which one end is connected to the outgoing orifice 16 of the small air pump 17, and the other end is connected with the orifice 19 in the ring sealing element 18, as well as the air channels 20, formed in the body elements of the cartridge, along the external surface of the neck of the bottle, through which the pressurized external air from the small air pump is supplied into the internal space 21 of the bottle.

The air supply device for generation of the required pressure in the internal space of the bottle consists of the body 22, fixed on the bottle and containing inside it a small air pump 17, connected with the micromotor 23, power elements 24, power switch 25 and connection wires 26.

The device shown in the figures 1 and 2 operates as follows:

The sealed bottle 1 with vodka is taken in hands and opened by unscrewing the sealing cap 2, at that the detachable ring 5 is detached from the sealing cap, after which the bottle is turned with its neck down over a drinking vessel. The vodka, contained in the bottle 1 flows through the neck to the rough filtering material 10, part thereof, by the effect of gravitational forces, passes through it and enters the space 9 of the body of the cartridge, filled with sorbing agents 11, which provide the required grade of vodka treatment. Having passed through the sorbing agents 11, the vodka is unable to pass through the fine filtering material 12 due to decrease of the pressure forces caused by the formation of tenuous air in the internal space 21 of the bottle 1 and a strong overall resistance of the filtering materials and the sorbing agent. To push the vodka through the filtering materials and the sorbing agent, the consumer turns on the power switch 25, as the consequence of which the micromotor 23 is powered by the power elements 24, and the small air pump 17, connected with the micromotor 23, begins to supply pressurized air into the internal space 21 of the bottle 1. The air from the small air pump 17 enters the bottle 1 through its inlet orifice 16, air conducting pipe 15, orifice 19 in the ring sealing element 18 and the air channels 20, formed in the elements of the body 4 of the cartridge along the external surface of the neck of the bottle. Upon filling the drinking vessel, the power switch 25 is turned off, stopping the operation of the small air pump 17, and the bottle is turned with its neck up. The excessive air pressure pushes part of the vodka from the space 9 of the cartridge, filled with sorbing agents and filtering materials, through the fine filtering material 12 into the available space of the cavity 9 of the body 4 of the cartridge above it, limited by the restraining spreader 7. The residual pressure is relieved through the channels 8 for vodka. The configuration with the limiting spreader 7 ensures elimination of vodka splashing during the release of the pressure. The sealing cap 2 is screwed onto the body 4 thus encapsulating the bottle 1. Small remains of the vodka above the filter, by the effect of the gravitational forces, gradually flows back into the bottle. The operation can be repeated as required.

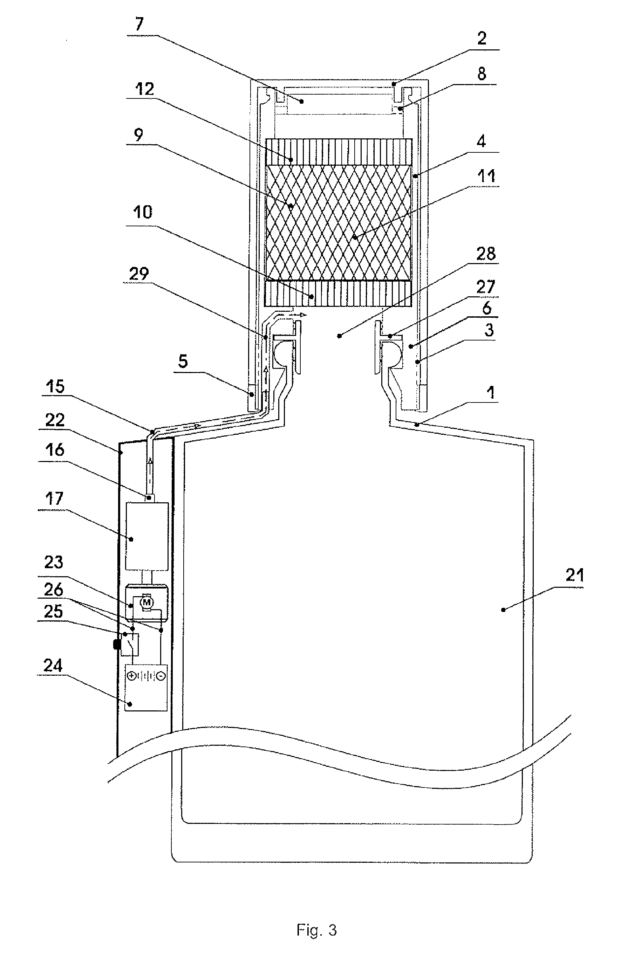

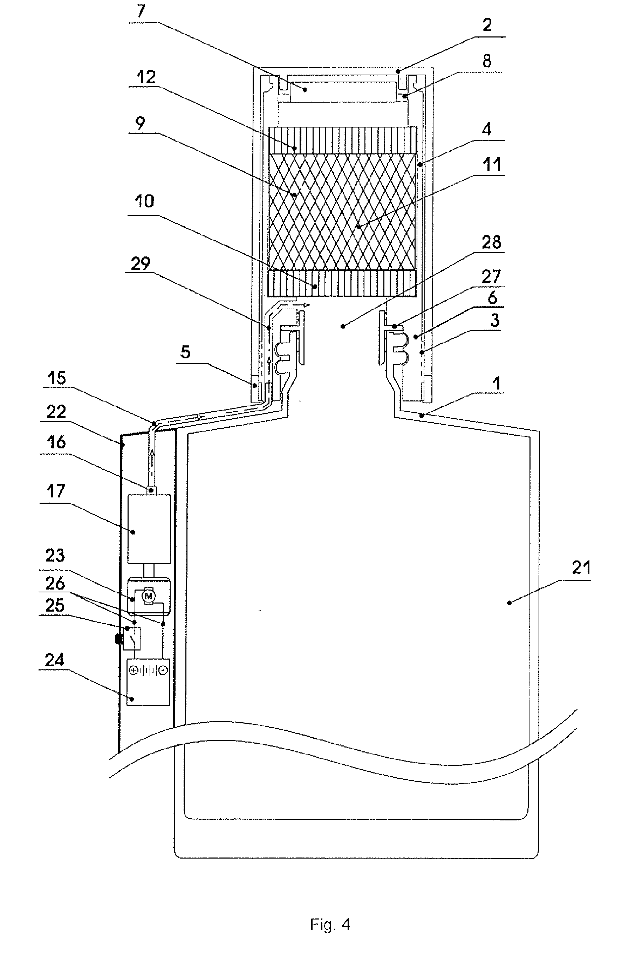

The second version of the device implementation is shown in the figures 3 and 4. It is distinguished by the air feeder made in the body of the cartridge and there is added an encapsulating element 27 with the central orifice 28 for the vodka flow.

The operation of the device shown in the figures 3 and 4 is similar to the versions of the device described above.

The air from the small air pump 17 enters the internal space 21 of the bottle 1 through the inlet orifice of the pump 16, air supply tube 15, air feeder 29 in the body of the cartridge and the central orifice 28 in the encapsulating element 27.

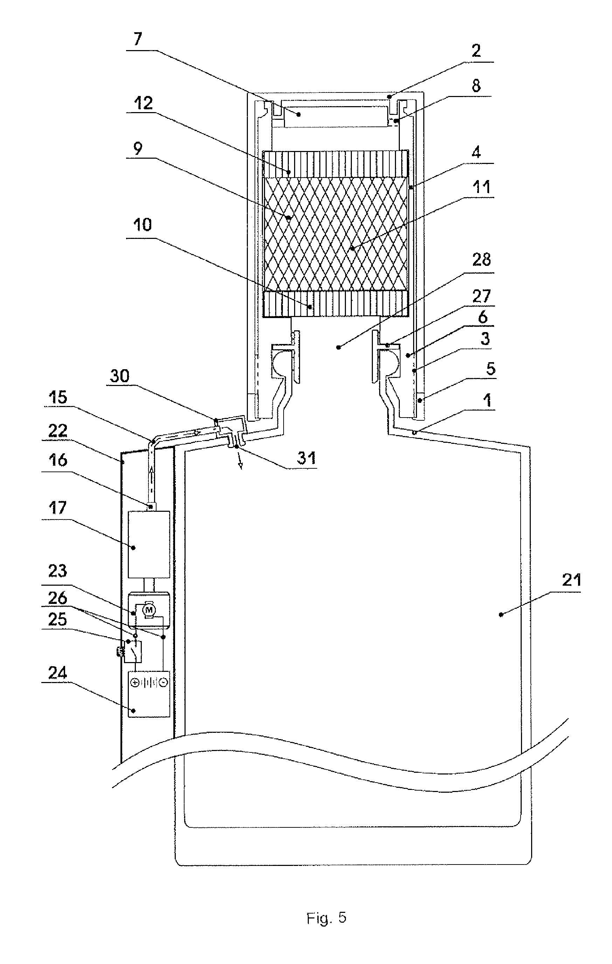

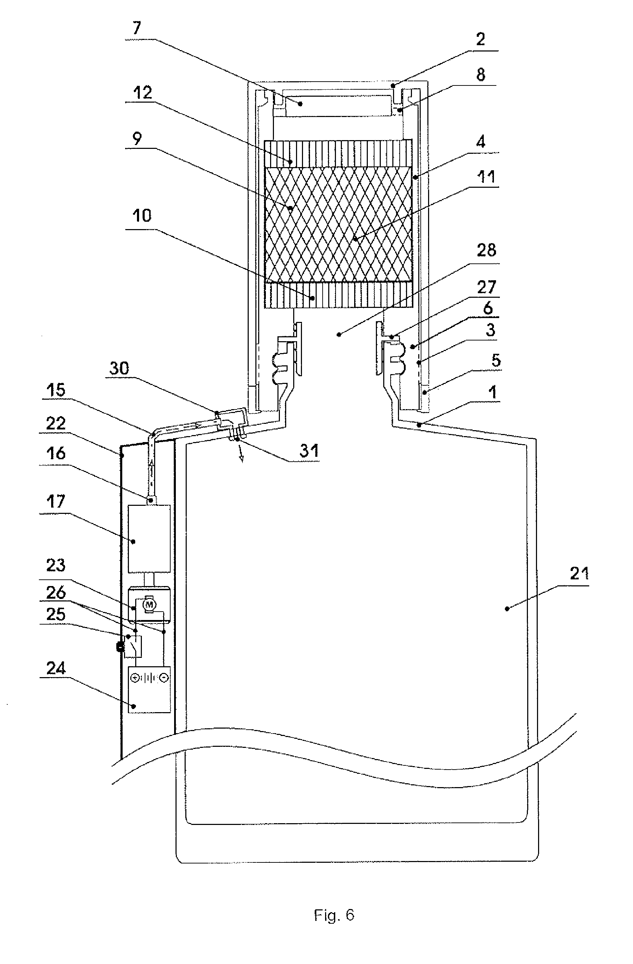

The third example of the device implementation is shown in the figures 5 and 6. It is distinguished by the air supply pipe 15, which one end is connected to the outlet orifice 16 of the small air pump 17, and the other end, through the seal 30 with a specially made orifice 31 in the bottle.

The device operation is similar to the versions described above.

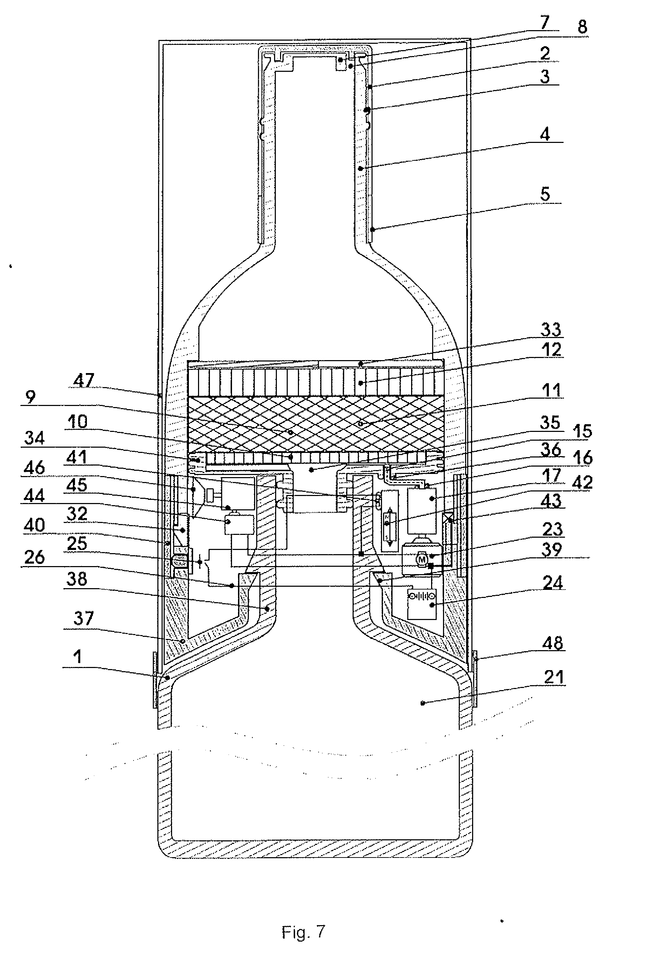

The forth example of the device implementation is shown in the figure 7.

The device, besides the vodka vessel 1, contains four main components: a cartridge with filter, air supply device to generate the required pressure inside the bottle, control assembly of the air supply into the bottle and the control assembly and the device operation indication.

The cartridge with filter consists of the sealing cap 2, with internal thread 3 to screw it onto the body 4 of the cartridge and the fist opening holder in form of a detachable ring 5, transparent body 4 with the placement spot with the holder 32 for connection with the body 37 of the air supply device. In the top section of the body 4 of the cartridge there is a limiting spreader 7 with channels 8 for the vodka flow and the thread 3 on the external surface to screw on the sealing cap 2. The following elements are sequentially placed in the internal space 9 of the cartridge: encapsulating element 34 with the central orifice 35, which connects the space of the cartridge 9 with the internal space 21 of the bottle 1 and an additional orifice 36 for the air supply tube; rough filtering material 10, sorbing agent 11 or a mixture thereof, fine filtering material 12 and the placement grid 33 with orifices for the vodka flow.

The air supply device to form the required pressure in the internal space of the bottle consists of the cylindrical body 37 connected with the external surface of the neck 38 of the bottle 1 using the placement spot with a sealing holder in form of a ring seal 39, small air pump 17, connected with the micromotor 23 and power elements 24.

The assembly for air supply into the bottle consists of the air supply tube 15, which one end is connected to the outlet orifice 16 of the small air pump 17, and the other end is connected with the additional thorough orifice 36 in the encapsulating element 34 and the central orifice 35 in the encapsulating element through which the pressurized external air from the small air pump 17 is supplied into the internal space 21 of the bottle 1.

The assembly for control and indication of the operation consists of the rotary ring 40, which is fixed on the upper section of the body 37 of the air supply device, power switch 25, gravitational automatic switch in form of a magnetically operated sealed switch 41 with the magnet 42, light diodes 43, located along the perimeter of the side of the transparent body 4 of the cartridge, a permanent programmable memory device 44 in form of a memory microchip, with recording of a melody or a phrase, low frequency amplifier 45, speaker 46 and connection wires 26. The whole device is covered by a transparent safety cap 47, connected with the bottle by means of a fixing adhesive tape 48.

The device shown in the figure 7 operates as follows:

The bottle 1 with vodka is taken in hands, the fixing adhesive tape 48 is detached, which fixes the bottle with the transparent safety cap 47, and the cap is removed. Then the device is opened by unscrewing the cap 2, by dislocation of the rotary ring 40, turned on by the power switch 25 and turned with its neck down over the drinking vessel. The vodka contained in the bottle 1 flows through the neck of the bottle 38 and the central orifice 35 in the encapsulating element 34 to the rough filtering material 10, part of it, under the effect of gravitational forces, passes through it and enters the space 9 of the body 4 of the cartridge, filled with sorbing agents 11, which ensure the required level of vodka treatment. Having passed through the sorbing agent 11 or a mixture thereof, the vodka shall be unable to pass the fine filtering material 12 due to decrease of the pressure force as the consequence of formation of the tenuous air in the internal space 21 of the bottle 1 and the strong overall resistance of the filtering materials and the sorbing agent. However, on turning the bottle with its neck down, the magnet 42, under the effect of gravitational forces, is displaced, the contacts of the magnetically operated sealed switch 41 are closed and the micromotor 23 is supplied with power form the power elements 24, and the small air pump 17, connected with the micromotor 23, begins to operate. The air through the outlet orifice 16 of the small air pump 17 is supplied to the air supply tube 15, additional through orifice 36 and the central orifice 35 in the encapsulating element 34 thus entering the internal space 21 of the bottle with vodka. On achieving the nominal pressure, the vodka begins to be pushed through the filtering materials and the sorbing agent, being treated and filtered in the process. On filling the drinking vessel, the bottle 1 is turned with its neck up. The automatic switch turns the micromotor 23 off, the air is no longer supplied into the internal space 21 of the bottle 1, however, it holds residual pressure, and therefore a minor amount of vodka from the cartridge 9, filled with sorbing agent and filtering materials, through the fine filtering material 12, will be pushed out into the available part of the space of the body 4 of the cartridge above it, limited by the restraining spreader 7. The excess of the air is discharged to the exterior through vodka flow channels 8. The restraining spreader 7 configuration prevents splashing of vodka on release of the pressure. The sealing cap 2 is screwed onto the top section of the body 4 of the cartridge, and it encapsulates the bottle. By turning the rotary ring 40 in the reverse direction, the power switch 25 is turned off and power supply to the device is cut off. The minor remains of vodka above the filter will gradually flow into the bottle under the effect of gravitational forces. The operation can be repeated as required.

Although the aforesaid shows only a few preferable versions of implementation of the invention, it is obvious that in accordance with the definition attached, there can also be other versions of implementation, corresponding to the volume of the present device.

## Claims

1. Device for treatment and purification of a liquid product located in the bottle, containing a cartridge, consisting of a body connectable with the neck of the bottle and a filter located therein, and an air supply device **characterized by** the filtering materials and sorbing agents being fixed on the internal surface in the body of the cartridge, the air supply device consists of a body fixed on the bottle, inside which there is a small air pump, connected with a micromotor, power elements and a power switch, wherein the device is fitted with an assembly to supply air into the bottle, which is connected to the small air pump.

2. The device according to claim 1 is **characterized by** the air supply assembly being formed with a end-to-end air channel implemented in the body of the cartridge.

3. The device according to claim 1 is **characterized by** the air supply assembly being formed by the ring sealing element with an orifice for the tube, located between the body of the cartridge and the neck of the bottle, connected and encapsulated with the tube and communicating with the channels made in the internal surface of the cartridge body and limited by the external surface of the neck of the bottle.

4. The device according to claim 1 is **characterized by** the air supply assembly being formed with an orifice made in the bottle, encapsulated within the air supply tube with a sealing connection.

5. The device according to any of the claims 1-4 is **characterized by** the filter being formed with sequential placement of the rough filtering material, a sorbing agent of a mixture thereof and the fine filtering material.

6. The device according to any of the claims 1-4 is **characterized by** the outlet orifice of the cartridge body being fitted with a restraining spreader.

7. The device according to any of the claims 1-4 is **characterized by** the body of the cartridge having airtight connection with the neck of the bottle through a placement spot with directional internal thread.

8. The device according to any of the claims 1-4 is **characterized by** the body of the cartridge having airtight connection with the neck of the bottle using a placement spot with an attachment.

9. The device according to any of the claims 7-8 is **characterized by** the connection assembly of the body of the cartridge with the neck of the bottle that is made of a sealing holder in the form of a ring seal.

10. The device according to any of the claims 1-4 is **characterized by** the body of the cartridge, being mechanically connected by the placement spot with a lock with the body of the air supply device, which, in turn, is connected with the neck of the bottle through the placement spot fitted with a lock holder in form of a ring seal, and the whole device being covered by a transparent safety cap connected with the bottle.

11. The device according to any of the claims 1-4 is **characterized by** the body of the cartridge having airtight connection with the neck of the bottle by means of an encapsulating element with a central orifice for the vodka flow from the bottle and an additional through orifice for the air supply tube.

12. The device according to any of the claims 1-4 is **characterized by** the filtering materials and the sorbing agent that are allocated in the body of the cartridge, between the encapsulating element with the central orifice and an orifice for the air supply tube and the securing grid.

13. The device according to any of the claims 1-4 is **characterized by** the sealing cap connection with the body of the cartridge.

14. The device according to claim 13 is **characterized by** the sealing cap connection with the body of the cartridge by means of a thread with pilfer-proof-caps in the form of a detachable ring.

15. The device according to any of the claims 1-4 is **characterized by** the body of the air supply device, fixed on the bottle, being connected with the transparent body of the cartridge and contains a small air pump, connected with the micromotor, power cells, power switch, automatic switch, connected in parallel with the latter, made with magnetically operated sealed switch with a magnet, light indicator made with light diodes and/or a sound indicator consisting of the permanent programmable memory device, low frequency amplifier and a speaker.

16. The device according to claim 15 is **characterized by** the power switch being installed on the body of the air supply device with the possibility of interaction with the rotary ring installed thereon.
